# EUROPÄISCHE PATENTSCHRIFT

(11) **EP 0 894 880 B1**
(45) Veröffentlichungstag und Bekanntmachung des Hinweises auf die Patenterteilung: **22.10.2003**
(21) Anmeldenummer: 98111924.1
(22) Anmeldetag: 27.06.1998
(51) Int. Cl.: D03C 7/04, H02K 7/08, H02K 7/14, H02K 11/00

(54) **Rotations-Kantendreher mit direkt elektromagnetischem Antrieb für Webmaschinen**
Rotary leno selvedge mechanism with direct electromagnetical drive for looms
Mécanisme rotatif pour lisières pas de gaze à entraînement électromagnétique direct pour métiers à tisser

(30) Priorität: 01.08.1997 DE 19733262
(43) Veröffentlichungstag der Anmeldung: 03.02.1999
(73) Patentinhaber: LINDAUER DORNIER GESELLSCHAFT M.B.H, 88129 Lindau (DE)
(72) Erfinder: Häussler, Horst, 88131 Lindau (DE); Holz, Hans-Joachim, 88131 Lindau (DE); Krumm, Valentin, 88138 Hergensweiler (DE)

(56) Entgegenhaltungen:
- DE-C- 4 405 776
- DE-C- 4 405 777
- DE-U- 29 713 723
- US-A- 4 853 567
- PATENT ABSTRACTS OF JAPAN vol. 016, no. 067 (E-1168), 19. Februar 1992 -& JP 03 261358 A (SUMITOMO HEAVY IND LTD), 21. November 1991

## Beschreibung

Die Erfindung betrifft einen Rotations-Kantendreher mit direkt elektromagnetischem Antrieb für Webmaschinen, mittels welchem durch Volldreherbindungen die Schussfäden an den Geweberändem eines Gewebes abgebunden werden und eine dauerhafte Gewebekante hoher Qualität herstellbar ist.

Bekannt ist aus der DE 44 05 776 C1 ein Rotations-Kantendreher für eine Webmaschine mit einer drehangetriebenen Dreherscheibe, die zwei symmetrisch um die Mittenachse der Dreherscheibe angeordnete Fadenführungen aufweist, wobei durch jede Fadenführung ein von einer ersten und einer zweiten Dreherspule gelieferter Dreherfaden führbar ist.
Im Hinblick auf die Anordnung des Rotations-Kantendrehers wird in der vorgenannten DE-PS als vorteilhaft erwähnt, wenn die Drehachse der Dreherscheibe parallel zur Schussfadeneintragsrichtung liegt und der Abstand der Dreherscheibe vom Bindepunkt des Gewebes auf ein notwendiges Minimum festlegbar ist.
In dem bekannten Rotations-Kantendreher bildet die Dreherscheibe den Läufer (Rotor) eines elektrisch ansteuerbaren Stellmotors.
Bei dem Stellmotor handelt es sich um einen Motor bekannten Wirkprinzips mit im wesentlichen radialem Magnetfluss, wobei der Stator die Wicklungen trägt und der Rotor auf dem Außenumfang teilkreisartig angeordnete Magnete aufnimmt.
Der Stator des Stellmotors ist in einem gehäuseähnlichen Trägerteil aufgenommen, das einen Halter zur Verbindung mit der Webmaschine ausbildet.

Ein elektromotorischer Wellenantrieb mit axialem Magnetfluss ist aus JP 03261358 A bekannt.

Aufgabe der Erfindung ist es, einen Rotations-Kantendreher der im Oberbegriff von Anspruch 1 genannten Gattung zu schaffen, in dem die die Dreherfäden führende Dreherscheibe der Rotor eines direkt elektromagnetischen Antriebes ist und in welchem Antrieb bei Verwirklichung einer schmalen Bauart des Kantendrehers ein vom radialen Magnetfluss zwischen Stator und Rotor abweichender Magnetfluss vorliegt.

Erfindungsgemäß wird die Aufgabe durch die Merkmale des Patentanspruchs 1 gelöst.

Danach ist erfindungswesentlich, dass die Dreherscheibe aus einem Eisenring mit magnetischem Rückschluss besteht, und der Eisenring eine statorseitig umlaufende Ringfläche besitzt, auf der mehrere Permanentmagnete derart teilkreisartig angeordnet sind, dass zwischen dem Rotor und dem Stator des Antriebs ein axialer Magnetfluss besteht.

Erfindungswesentlich ist ferner, dass in einem Rotations-Kantendreher mit direkt elektromagnetischem Antrieb, in dem die Dreherscheibe der Rotor des Antriebes ist, die Dreherscheibe drehend gelagert und die Lagerung mit dem Statorgehäuse fest verbunden ist.
In weiterer Ausgestaltung der Erfindung ist, unter Aufrechterhaltung eines Luftspaltes zwischen den Permanentmagneten und dem Stator, der Stator mit seinen Wicklungsträgern in einem mit der Webmaschine verbindbaren Gehäuse angeordnet ist.
Die Dreherscheibe besteht aus einem Eisenring mit magnetischem Rückschluss.
Die rotierende Lagerung der Dreherscheibe um deren Mittenachse, die zugleich die Mittenachse des Rotations-Kantendrehers ist, wird dabei dadurch verwirklicht, dass ein erster Lagerring eines Wälzlagers fest mit der Dreherscheibe verbunden ist, während ein zweiter Lagerring des Wälzlagers direkt oder indirekt mit dem Statorgehäuse in Verbindung steht.
Ist das Wälzlager ein Axialwälzlager, steht die Dreherscheibe mit dem Innenring des Lagers in fester Verbindung, während der Außenring entweder direkt oder über einen Montagering mit dem Statorgehäuse fest verbunden ist.
Ist das Wälzlager ein Radialwälzlager, steht die Dreherscheibe mit dem Außenring des Lagers in fester Verbindung, während der Innenring von einer Zentrierung in dem Statorgehäuse drehfest aufgenommen ist.
Die Dreherscheibe mit den Permanentmagneten und der jeweils rotierbare Lagerring bilden dabei den Rotor des Rotations-Kantendrehers.

In einer weiteren Ausführungsart des Rotations-Kantendrehers besteht die Dreherscheibe bzw. der Rotor aus einem Metallring (Stahl), der zwischen dem Stator und einer statorfesten Scheibe mit Eisenrückschluss drehend gelagert ist und wobei der Metallring statorseitig und eisenrückschlussseitig auf einer Ringfläche des Metallringes eine Vielzahl von Permanentmagneten trägt, die darauf teilkreisartig angeordnet sind.

Zur Erfassung der Lage des Rotors bzw. der Dreherscheibe besitzt der Rotations-Kantendreher ein Absolut-Wegmesssystem zur Drehwinkelerfassung, damit zum einen der Rotor direkt nach dem Einschalten der Webmaschine eine definierte Winkellage einnehmen kann und damit zum anderen die Dreherfachbildung des Rotations-Kantendrehers synchron zur Webfachbildung der Fachbildeeinrichtung der Webmaschine steuerbar ist.

Auf den Aufbau und die Funktionsweise des Messsystems soll hier nicht näher eingegangen werden, weil dies nicht unmittelbar Gegenstand der Erfindung ist.

Die Erfindung soll nachstehend anhand von Ausführungsbeispielen näher beschrieben werden.

Es zeigen:
- Figur 1: die Anordnung eines Rotations-Kantendrehers zum Bindepunkt eines Gewebes in der Webmaschine in schematischer Darstellung nach Ansicht A-A in Figur 2,
- Figur 2: den Rotations-Kantendreher gemäß Figur 1 rechtsseitig des Gewebes, entgegen der Webrichtung gesehen, angeordnet,
- Figur 3: einen Halbschnitt durch den Rotations-Kantendreher gemäß der Linie C-C in Figur 1,
- Figur 4: eine Schnittdarstellung des Rotations-Kantendrehers gemäß der Linie B-B in Figur 1 in einer ersten Ausführungsvariante der Rotorlagerung,
- Figur 5: eine Schnittdarstellung des Rotations-Kantendrehers gemäß der Linie B-B in Figur 1 in einer zweiten Ausführungsvariante der Rotorlagerung,
- Figur 6: die Dreherscheibe in Halbschnittdarstellung gemäß der Figur 4,
- Figur 7: eine Ausführungsvariante des Rotations-Kantendrehers mit rotierendem Eisenrückschluß in schematischer Darstellung,
- Figur 8: eine Ausführungsvariante des Rotations-Kantendrehers mit statorfestem Eisenrückschluß in schematischer Darstellung.

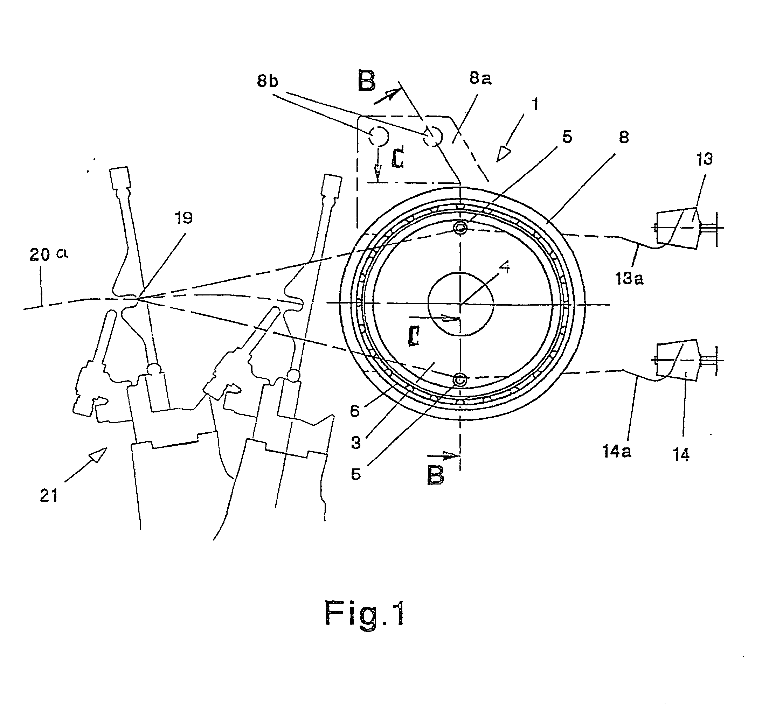

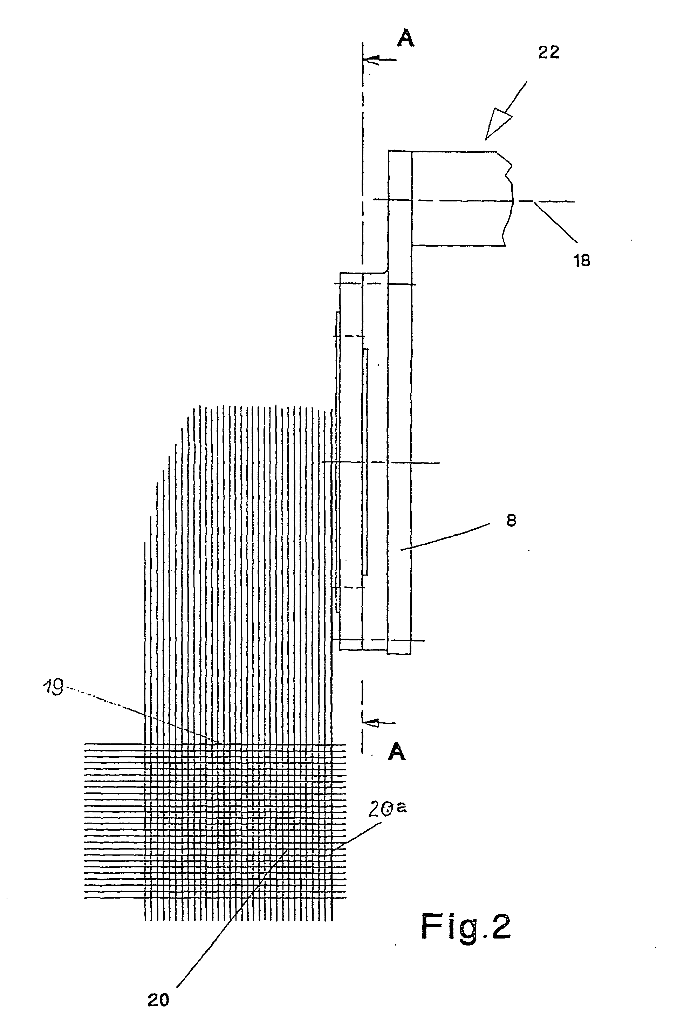

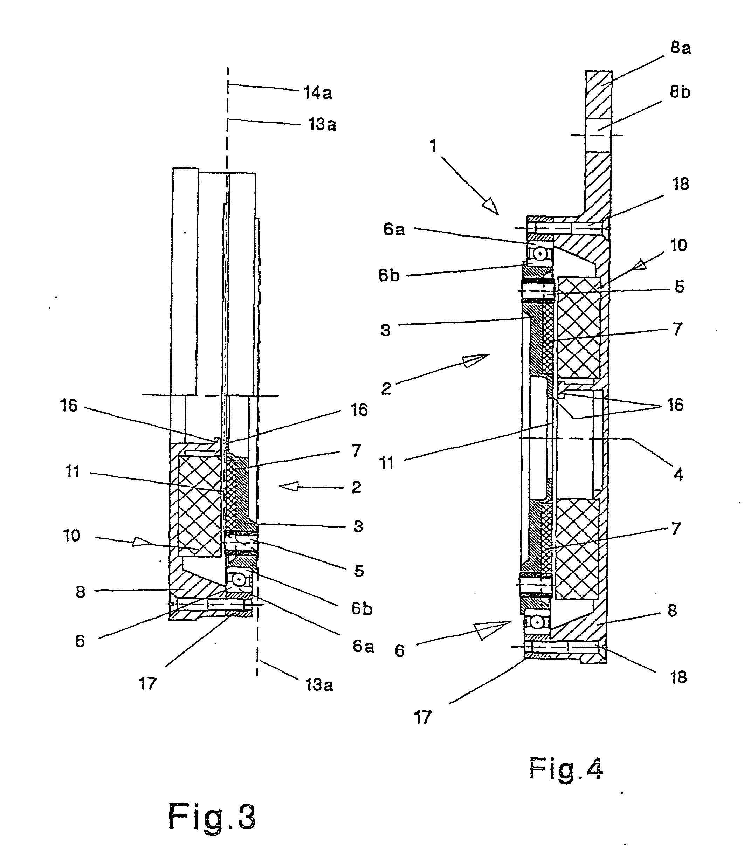

In Figur 1 ist der Rotations-Kantendreher 1 gemäß der Linie A-A in Figur 2 dargestellt. Der Kantendreher 1 besteht hier aus dem Gehäuse 8, in dem der Stator 10 des direkt elektromagnetischen Antriebs angeordnet ist - siehe auch Figur 3 und 4 bis 5 - und aus der von einem Lagerring des Wälzlagers 6 getragenen Dreherscheibe 3 mit den Fadenführungen 5, die den Rotor 2 des elektromagnetischen Antriebs bildet.
Das Gehäuse 8 besitzt ferner einen Ansatz 8a mit Bohrungen 8b zur Befestigung des Kantendrehers 1 in der Webmaschine. Hier ist der Kantendreher 1 in einem relativ geringem Abstand vom Bindepunkt 19 des Gewebes 20 dargestellt.
Auf die weiter in Figur 1 dargestellten Einrichtungen 21 der Webmaschine soll hier nicht weiter eingegangen werden, weil diese nicht erfindungswesentlich sind.

Durch die Fadenführungen 5 sind die von den Dreherfadenspulen 13,14 abziehbaren oder durch diese Spulen lieferbaren Dreherfäden 13a,14a geführt, die im Bindepunkt 19 des Gewebes 20 zum Bilden einer festen Gewebekante 20a zusammenlaufen.
Die Dreherspulen 13,14 können dabei maschinenfest rotierbar gelagert oder aber beide zusammen um eine gemeinsame Drehachse drehangetrieben sein. Die Verwendung eines gemeinsamen Drehantriebes für die Spulen 13,14, die dann in Art eines Karussells angetrieben werden, ist davon abhängig, ob der Rotations-Kantendreher mit umkehrbarer Drehrichtung der Dreherscheibe betrieben werden soll oder nur in eine Drehrichtung gearbeitet wird.

Figur 2 zeigt eine schmale Bauausführung des Rotations-Kantendrehres 1 zum Ausbilden einer festen Gewebekante 20a am Gewebe 20.

Entgegen der Webrichtung gesehen, handelt es sich bei dem Rotations-Kantendreher 1 um einen rechtsseitig des Gewebes 20 in der Webmaschine 22 angeordneten Kantendreher. Die Verbindung des Kantendrehres 1 mit der Webmaschine 22 ist schematisch bei 8,18 dargestellt.

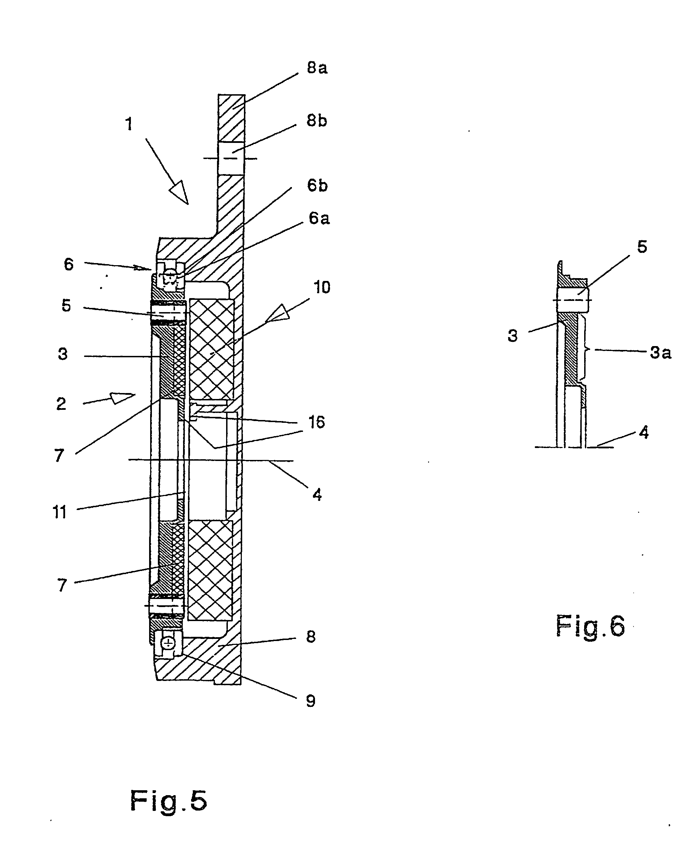

Figur 3 ist in einem größeren Maßstab dargestellt, als die Figuren 1 und 2. Gemäß Figur 3 ist in dem Halbschnitt des Kantendrehers 1 nach der Linie C-C in Figur 1 in dem Gehäuse 8 der Stator 10 aufgenommen.
Der Rotor 2 besteht hier aus der Dreherscheibe 3 mit den Fadenführungen 5, mehreren auf der Ringfläche 3a der Dreherscheibe 3 - siehe auch Figur 6 - angeordneten Permanentmagneten 7, aus einem Messsystem 16 und aus dem Lagerring 6b des Wälzlagers 6.
Der Lagering 6a des Wälzlagers 6 ist über einen Montagering 17 und mehreren den Montagering 17 mit dem Gehäuse 8 verbindenden Schrauben 18 drehfest in dem Statorgehäuse 8 aufgenommen.
Der Rotor 2 ist damit um die Achse 4 rotierend im Statorgehäuse 8 gelagert.
Zwischen dem Rotor 2 und dem Stator 10 besteht in axialer Richtung ein Luftspalt 11, der wenigstens so groß ist, daß sich die Dreherfäden 13a,14a darin bewegen können.

Die Figuren 4 und 5 zeigen den Rotations-Kantendreher 1 gemäß der Linie B-B in Figur 1.
Die Ausbildung und Anordnung des Rotors 2 in dem Statorgehäuse 8 entspricht der, wie sie in Figur 3 beschrieben ist.

Figur 5 allerdings offenbart die Verwendung eines anderen Wälzlagers und eine andere Verbindung des selben mit dem Statorgehäuse 8, als es die Figuren 3 und 4 zeigen.

Während in Figur 4 die Drehachse 3 mit dem Innenring 6b eines Axialwälzlagers 6 fest verbunden ist, ist in Figur 5 die Dreherscheibe 3 mit dem Außenring 6b eines Radialwälzlagers 6 fest verbunden.
Der Innenring 6a des Radialwälzlagers 6 ist hier in einer Zentrierung 9 des Gehäuses 8 drehfest aufgenommen.

In den Figuren 4 und 5 ist schematisch ein Drehwinkelerfassungssystem 16, z.B. bestehend aus einem mit dem Rotor 2 verbundenen Signalgeber und einem mit dem Statorgehäuse 8 fest verbundenen Signalaufnehmer.
Das Erfassungssystem dient der Erfassung der Winkellage des Rotors. Direkt nach dem Einschalten der Webmaschine nimmt zum einen der Rotor eine definierte Winkellage ein und zum anderen ermöglicht das System die Dreherfachbildung des Rotations-Kantendrehers synchron zur Webfachbildung der Fachbildeeinrichtung der Webmaschine zu steuern.

Die Figur 6 zeigt die Dreherscheibe 3 mit der Fadenführung 5 als Einzelteil. Auf der hier angegebenen Ringfläche 3a sind die Permanentmagnete 7 gemäß der Figuren 3 bis 5 teilkreisartig angeordnet. Diese bilden die Pole zu dem Stator 10.

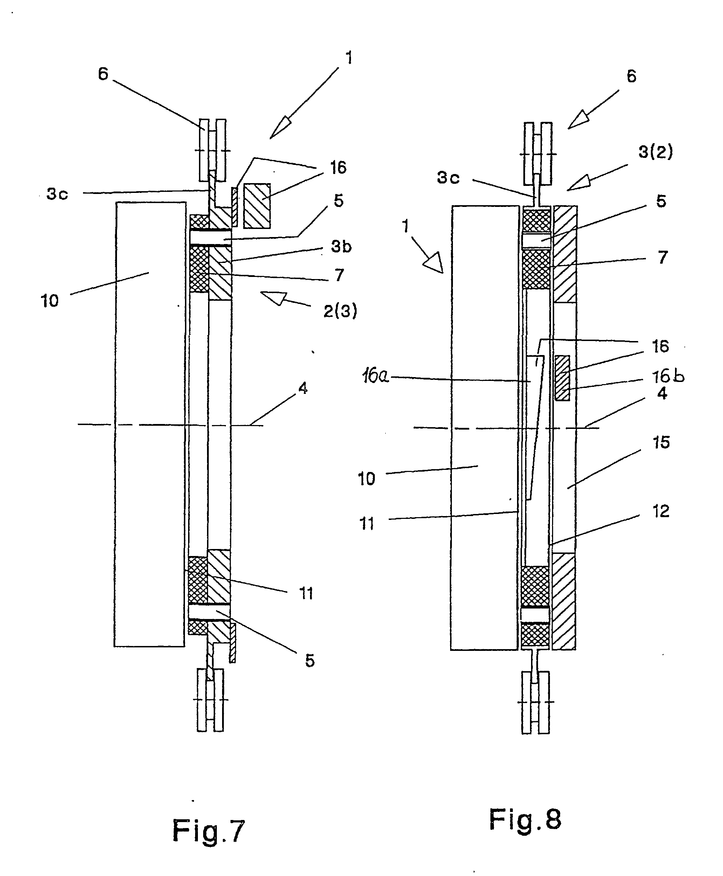

Die Figur 7 zeigt einen Rotations-Kantendreher 1 mit rotierendem Eisenrückschluß.
Ein an seinem Außenumfang gelagerter Metallring 3c, der ein Stahlring ist, trägt im Bereich seines Innenumfangs einen Eisenrückschluß-Ring 3b und auf der statorseitigen Ringfläche teilkreisartig angeordnete Permanentmagnete 7.
Der Metallring 3c und der Eisenrückschluß-Ring 3b mit den Permanentmagneten 7 bilden hier die Dreherscheibe 3 bzw. den Rotor 2 des elektromagnetischen Antriebs.
Der Rotor 2 und der Stator 10 sind, wie in den vorangegangenen Figuren 3 bis 5, axial zueinander unter Einhaltung eines ausreichenden Luftspaltes 11 zur Bewegung der Dreherfäden 13a,14a angeordnet, wobei der Rotor 2 um die gemeinsame Mittenachse 4 von Rotor und Stator rotierend gelagert ist.

Zur Aufnahme der Dreherfäden 13a,14a sind die Fadenführungen 5 analog der Fadenführungen in der Dreherscheibe 3 gemäß der Figuren 3 bis 6 angeordnet. Hier allerdings durchgreifen die Fadenführungen 5 den Eisenrückschluß-Ring 3b und die betreffenden Magnete 7.

Zur Drehwinkelerfassung des Rotors 2 bzw. der Dreherscheibe 3 ist der Dreherscheibe 3 ein Drehwinkelerfassungssystem 16 zugeordnet, bestehend aus einem mit der Dreherscheibe 3 verbundenen Signalgeber und einem dem Signalgeber zugeordnet Signalaufnehmer.

Der Signalgeber kann hier z.B. in Art einer Taumelscheibe ausgebildet sein, während der Signalaufnehmer ein fest angeordneter Sensor ist.

Die Figur 8 zeigt einen Rotations-Kantendreher 1 mit statorfestem Eisenrückschluß.
Die Dreherscheibe 3 besteht hier aus einem an ihrem Außenumfang drehend gelagerten Metallring (Stahl) 3c, der zwischen dem Stator 10 und einer statorfesten Scheibe 15 mit Eisenrückschluß eingeordnet ist.
Der Metallring 3c trägt statorseitig und eisenrückschlußseitig auf einer Ringfläche im Bereich seines Innenumfangs eine Vielzahl von Permanentmagneten 7, die teilkreisartig angeordnet sind.
Zwischen der Dreherscheibe 3 und dem Stator 10 einerseits und zwischen der Dreherscheibe 3 und der statorfesten Scheibe 15 mit Eisenrückschluß andererseits besteht ein ausreichender Luftspalt 11,12 zur Bewegung der Dreherfäden 13a,14a.
Zur Aufnahme der Dreherfäden 13a,14a sind die Fadenführungen 5 analog der Fadenführungen in der Dreherscheibe 3 gemäß der Figuren 3 bis 6 angeordnet. Hier allerdings durchgreifen die Fadenführungen 5 die betreffenden Permanentmagneten 7.
Die Dreherscheibe 3, der Stator 10 und die Eisenrückschluß-Scheibe 15 sind, wie in den Figuren 3 bis 5 dargestellt, axial zueinandern angeordnet, wobei die Anordnung eine gemeinsame Mittenachse 4 besitzt.
Um diese Mittenachse 4 ist die Dreherscheibe 3 mit den Fadenführungen 5 zusammen mit den Magneten 7 drehend gelagert. Die Dreherscheibe 3 bildet den Rotor 2.

Zur Erfassung des Drehwinkels der Dreherscheibe 3 bzw. des Rotors 2 ist ein Erfassungssystem 16 in dem schematisch dargestellten Rotations-Kantendreher 1 integriert.
Ein solches Erfassungssystem ist z.B. ein Absolut-Messsystem, bestehend aus wenigstens zwei in der statorfesten Eisenrückschluß-Scheibe 15 eingeordneten Sensoren, die als Signalaufnehmer 16b fungieren, und eine um die Mittenachse 4 zusammen mit dem Rotor 2 rotierende Scheibe, die als Signalgeber 16a fungiert, wobei die Scheibe eine Art Taumelbewegung in Bezug auf die außermittig angeordneten Signalaufnehmer 16b ausführt.
Je Umdrehung der Dreherscheibe 3 bzw. des Rotors 2 ändert sich dann der axiale Abstand zu den wenigstens zwei außermittig angeordneten, induktiven Signalaufnehmern 16b zwischen einem Minimal- und einem Maximalwert.

Die erfindungsgemäßen Rotations-Kantendreher besitzen eine schmale Bauausführung von weniger als 25 mm Breite, so daß sie in Bereiche der Webmaschine einordenbar sind, insbesondere im Bereich des Vorderfaches, wo relativ ungünstige Platzverhältnisse bestehen. Die Lagerung des Rotors ist einfach und beherrschbar im Hinblick der Aufnahme radial und axial wirkender Kräfte.
Des weiteren ist die Gefahr des Zusetzens der Luftspalte insbesondere durch Flusen gering, da die Luftspalte durch die Bewegung der Dreherfäden freigehalten werden.
Von besonderem Vorteil im Zusammenhang mit der schmalen Bauausführung ist, daß die Dreherscheibe bzw. der Rotor massearm ausgebildet ist und dadaurch ein geringes Trägheitsmoment besitzt. Damit ist der Rotor hervorragend geeignet, innerhalb von wenigen Millisekunden aus z.B. einer Drehzahl von etwa 750 min ⁻¹ einen Reversiervorgang zu realisieren.

### ZEICHNUNGS-LEGENDE

- 01: Rotations-Kantendreher
- 02: Rotor
- 03: Dreherscheibe
- 03a: Ringfläche
- 03b: Eisenrückschluß
- 03c: Metallring
- 04: Mittenachse
- 05: Fadenführung
- 06: Wälzlager
- 06a: Lagerring
- 06b: Lagerring
- 07: Permanentmagnet
- 08: Gehäuse
- 08a: Ansatz
- 08b: Bohrung
- 09: Zentrierung
- 10: Stator
- 11: Luftspalt
- 12: Luftspalt
- 13: Dreherspule
- 13a: Dreherfaden
- 14: Dreherspule
- 14a: Dreherfaden
- 15: Scheibe
- 16: Erfassungssystem
- 16a: Signalgeber
- 16b: Signalaufnehmer
- 17: Montagering
- 18: Schraube
- 19: Bindepunkt
- 20: Gewebe
- 20a: Gewebekante
- 21: Einrichtung
- 22: Webmaschine

## Patentansprüche

1. Rotations-Kantendreher mit direkt elektromagnetischem Antrieb für Webmaschinen, mit einer drehend gelagerten Dreherscheibe (3), die zwei symmetrisch um ihre Mittenachse angeordnete Fadenführungen (5) aufweist und durch jede Fadenführung ein von einer ersten und einer zweiten Dreherspule gelieferter Dreherfaden (13a,14a) führbar ist, wobei die Dreherscheibe zusammen mit weiteren Komponenten den Rotor des elektromagnetischen Antriebs bildet und der Stator (10) in einem mit der Webmaschine verbindbaren Gehäuse (8) aufgenommen ist, **dadurch gekennzeichnet, dass** die Dreherscheibe (3) aus einem Eisenring mit magnetischem Rückschluss besteht und der Eisenring eine statorseitig umlaufende Ringfläche (3a) besitzt, auf der mehrere Permanentmagnetsegmente (7) derart teilkreisartig angeordnet sind, dass zwischen dem Rotor (2) und dem Stator (10) ein axialer Magnetfluss besteht und wobei die Dreherscheibe (3) in einem von dem Statorgehäuse (8) getragenen Wälzlager (6) aufgenommen ist.

2. Rotations-Kantendreher nach Anspruch 1, **dadurch gekennzeichnet, dass** die Dreherscheibe (3) am Außenumfang gelagert ist.

3. Rotations-Kantendreher nach Anspruch 1, **dadurch gekennzeichnet, dass** ein erster Lagerring (6a) des Wälzlagers (6) drehfest mit dem Statorgehäuse (8) verbunden ist, während ein zweiter Lagerring (6b) mit der Dreherscheibe (3) verbunden ist.

4. Rotations-Kantendreher nach Anspruch 1, **dadurch gekennzeichnet, dass** die weiteren Komponenten der die Dreherscheibe (3) tragende Lagerring (6b) des mit dem Gehäuse (8) verbundenen Wälzlagers (6) und die Permanentmagnete (7) sind.

5. Rotations-Kantendreher nach Anspruch 1, **dadurch gekennzeichnet, dass** zwischen dem Rotor (2) und dem Stator (10) ein ausreichender Luftspalt (11) vorhanden ist.

6. Rotations-Kantendreher nach Anspruch 1, **dadurch gekennzeichnet, dass** die Dreherscheibe (3) zwischen dem Stator (10) und einer parallel zum Stator (10) angeordneten statorfesten Scheibe (15) mit Eisenrückschluß drehend gelagert ist.

7. Rotations-Kantendreher nach Anspruch 6, **dadurch gekennzeichnet, dass** zwischen der Dreherscheibe 3 und dem Stator (10) einerseits und zwischen der Dreherscheibe (3) und der Scheibe (15) andererseits ein ausreichender Luftspalt (11,12) vorhanden ist.

8. Rotations-Kantendreher nach Anspruch 1, **gekennzeichnet durch** ein in dem Rotations-Kantendreher integriertes Absolut-Messsystem (16) zur Erfassung des Drehwinkels der Dreherscheibe (3).

9. Rotations-Kantendreher nach Anspruch 1, **dadurch gekennzeichnet, dass** die Drehrichtung der Dreherscheibe (3) umkehrbar ist.

## Claims

1. Rotary leno selvedge mechanism, having a direct electromagnetic drive for looms, having a rotatably mounted leno disc (3) that comprises two thread guides (5) arranged symmetrically about its centre line, a leno thread (13a, 14a) supplied from a first and a second leno bobbin being guided through each thread guide, wherein the leno disc, together with further components, forms the rotor of the electromagnetic drive, and the stator (10) is received in a housing (8) connectable to the loom, **characterised in that** the leno disc (3) consists of an iron ring with magnetic yoke and the iron ring has a stator-side circumferential annular surface (3a) on which a plurality of permanent magnet segments (7) are arranged spaced around a circular path in such a way that an axial magnetic flux exists between the rotor (2) and the stator (10), and wherein the leno disc (3) is received in a rolling bearing (6) carried by the stator housing (8).

2. Rotary leno selvedge mechanism according to claim 1, **characterised in that** the leno disc (3) is mounted at its outer circumference.

3. Rotary leno selvedge mechanism according to claim 1, **characterised in that** a first bearing ring (6a) of the rolling bearing (6) is non-rotatably connected to the stator housing (8) whilst a second bearing ring (6b) is connected to the leno disc (3).

4. Rotary leno selvedge mechanism according to claim 1, **characterised in that** the further components comprise the bearing ring (6b), carrying the leno disc (3), of the rolling bearing (6) connected to the housing (8) and the permanent magnets (7).

5. Rotary leno selvedge mechanism according to claim 1, **characterised in that** there is an adequate air gap (11) between the rotor (2) and the stator (10).

6. Rotary leno selvedge mechanism according to claim 1, **characterised in that** the leno disc (3) is rotatably mounted between the stator (10) and a stator-mounted disc (15) having a magnetic yoke and arranged parallel to the stator (10).

7. Rotary leno selvedge mechanism according to claim 6, **characterised in that** between the leno disc (3) and the stator (10) on the one hand and between the leno disc (3) and the disc (15) on the other hand there is an adequate air gap (11, 12).

8. Rotary leno selvedge mechanism according to claim 1, **characterised by** an absolute measuring system (16) integrated in the rotary leno selvedge mechanism for the purpose of ascertaining the angle of rotation of the leno disc (3).

9. Rotary leno selvedge mechanism according to claim 1, **characterised in that** the direction of rotation of the leno disc (3) is reversible.

## Revendications

1. Tour de lisières rotatif avec entraînement direct électromagnétique pour métiers à tisser, avec une poulie de tour (3) logée en rotation qui comporte deux guide-fil (5) disposés symétriquement par rapport à leur axe médian et un fil de tour (13a, 14a) livré par une première et une seconde bobine de tour peut être guidé à travers chaque guide-fil, moyennant quoi la poulie de tour, conjointement avec d'autres composants, forme le rotor de l'entraînement électromagnétique et le stator (10) est logé dans un carter (8) connectable au métier à tisser, **caractérisé en ce que** la poulie de tour (3) est constituée d'un anneau en fer avec blindage magnétique et l'anneau en fer comporte une surface d'anneau circulaire (3a) du côté du stator sur laquelle plusieurs segments d'aimants permanents (7) sont disposés sur le cercle primitif de manière à ce qu'il se produise un flux magnétique axial entre le rotor (2) et le stator (10) et moyennant quoi la poulie de tour (3) est logée dans un palier à roulement (6) supporté par le carter du stator (8).

2. Tour de lisières rotatif selon la revendication 1, **caractérisé en ce que** la poulie de tour (3) est logée sur le pourtour extérieur.

3. Tour de lisières rotatif selon la revendication 1, **caractérisé en ce qu'**un premier anneau de palier (6a) du palier à roulement (6) est raccordé au carter du stator (8) de manière solidaire en rotation alors qu'un second anneau de palier (6b) est raccordé à la poulie de tour (3).

4. Tour de lisières rotatif selon la revendication 1, **caractérisé en ce que** les autres composants sont l'anneau de palier (6b), qui porte la poulie de tour (3), du palier à roulement (6) raccordé au carter (8) et les aimants permanents (7).

5. Tour de lisières rotatif selon la revendication 1, **caractérisé en ce qu'**un entrefer (11) suffisant est prévu entre le rotor (2) et le stator (10).

6. Tour de lisières rotatif selon la revendication 1, **caractérisé en ce que** la poulie de tour (3) est logée en rotation entre le stator (10) et une poulie (15) fixe sur le stator disposée parallèlement au stator (10) avec un blindage en fer.

7. Tour de lisières rotatif selon la revendication 6, **caractérisé en ce qu'**un entrefer (11,12) suffisant est prévu, d'une part, entre la poulie de tour (3) et le stator (10) et, d'autre part, entre la poulie de tour (3) et la poulie (15).

8. Tour de lisières rotatif selon la revendication 1, **caractérisé par** un système de mesure absolue (16) intégré dans le tour de lisières rotatif pour la détection de l'angle de rotation de la poulie de tour (3).

9. Tour de lisières rotatif selon la revendication 1, **caractérisé en ce que** le sens de rotation de la poulie de tour (3) est inversable.
